# EUROPEAN PATENT SPECIFICATION

(11) **EP 2 486 998 B1**
(45) Date of publication and mention of the grant of the patent: **20.04.2016**
(21) Application number: 12154333.4
(22) Date of filing: 07.02.2012
(51) Int. Cl.: B23D 47/12, B27B 9/00

(54) **Cutting tools**
Schneidewerkzeuge
Outils de coupe

(30) Priority: 09.02.2011 JP 2011025960
(43) Date of publication of application: 15.08.2012
(73) Proprietor: Makita Corporation, Anjo, Aichi 446-8502 (JP)
(72) Inventor: Naito, Tsutomu, Anjo,, Aichi 446-8502 (JP); Inayoshi, Hirotomo, Anjo,, Aichi 446-8502 (JP)
(74) Representative: Kramer Barske Schmidtchen Patentanwälte PartG mbB

(56) References cited:
- JP-A- 2001 293 672
- JP-A- 2009 090 393
- JP-A- 2009 274 407
- JP-A- 2011 011 283
- US-A- 1 497 067

## Description

The present invention relates to a cutting tool as per the preamble of claim 1, such as a portable circular saw, having a rotary cutting blade for cutting workpieces.

Such a cutting tool is know from JP 2009090393.

A known portable circular saw includes a base and a tool unit. The base has a lower surface for placing on an upper surface of a workpiece. The tool unit is supported on an upper surface of the base and has a circular cutting blade rotatably driven by an electric motor. The lower portion of the circular cutting blade protrudes downward from the base for cutting into the workpiece. The electric motor is mounted to a backside of a blade case with an intervention of a reduction gear section. The blade case is configured to cover the cutting blade. The reduction gear section serves to transmit rotation of the electric motor to a spindle, to which the cutting blade is mounted, after reduction of the rotational speed through engagement between reduction gears.

Recently, there has been proposed a cutting tool known as a battery powered tool that uses a rechargeable battery, such as a lithium-ion battery, as a power source, which has been already used in the other types of power tools, such as an electric screwdriver. Because the battery-powered tool is not necessary to be connected to a power supply cord as needed in the case of an AC-powered cutting tool, there is no limitation in the workplaces. In addition, because the handling property and the operability of the cutting tool during the cutting operation can be improved, it is possible to substantially improve the working efficiency. Japanese Laid-Open Patent Publication No. 2008-18498 discloses a known battery powered cutting tool.

However, the battery powered circular saw has the following problems. The battery is normally mounted to a rear end (one the side of the operator) of a handle provided on a tool body. Because the battery has a plurality of battery cells stored within a battery case, the weight of the battery is relatively large. Therefore, the gravity center of the entire circular saw is positioned rearwardly than that of a known AC-powered circular saw. Hence, the balance in weight of the battery powered circular saw becomes unfavorable and may cause increase of load that is necessary to be applied to hands of an operator in order to hold the circular saw at a desired position. Therefore, the handling property and the operability of the circular saw may be degraded.

Therefore, there has been a need in the art for a technique that can improve the handling property and the operability of a cutting device.

The above object can be achieved by providing a cutting tool according to claim1.

Additional objects, features, and advantages, of the present invention will be readily understood after reading the following detailed description together with the claims and the accompanying drawings, in which:
FIG 1 is a right side view of a cutting tool according to a representative example;
FIG. 2 is a plan view of the cutting tool as viewed in a direction indicated by an arrow (II) in FIG. 1;
FIG. 3 is a front view of the cutting tool as viewed in a direction indicated by an arrow (III) in F1G. 1;
FIG. 4 is a left side view of the cutting tool as viewed in a direction indicated by an arrow (IV) in FIG 3;
FIG 5 is a vertical sectional view of the cutting tool taken along line (V)-(V) in FIG 1;
FIG 6 is an enlarged vertical sectional view of an electric motor and a reduction gear section of the cutting tool taken along a vertical plane passing through an axis of an intermediate shaft of the reduction gear section;
FIG 7 is an enlarged side view of an operation lever and its peripheral part of a cutting depth adjusting mechanism of the cutting tool, showing the operation lever at a fixing position and a releasing position by chain lines and solid lines, respectively, and showing an operation member integrated with the base end of the operation lever;
FIG 8 is a perspective view of the operation lever;
FIG 9 is a view of a part of an operation member having a friction portion with a plurality of projections or recesses arranged in a lattice pattern according to an alternative example;
FIGS. 10 and 11 are views of parts of operation members each having a friction portion with a plurality of projections and recesses arranged in a pattern of parallel waveforms according to further alternative examples;
FIG 12 is a view of a part of an operation member having a friction portion with a plurality of projections according to a further alternative example;
FIG 13 is a side view of a handle of the cutting tool; and
FIG 14 is a schematic view showing the positional relationship between an output shaft of the motor, the intermediate shaft and a spindle of the reduction gear section.

Each of the additional features and teachings disclosed above and below may be utilized separately or in conjunction with other features and teachings to provide improved cutting tools. Representative examples of the present invention, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful examples of the present teachings. Various examples will now be described with reference to the drawings.

In one example, a cutting tool includes a base configured to be placed on an upper surface of a workpiece, and a tool unit supported on an upper surface of the base. The tool unit includes an electric motor having an output shaft, a reduction gear section including a two-stage reduction mechanism having reduction gears for reducing the rotational speed of the output shaft of the electric motor, a spindle coupled to the reduction gear section and a circular cutting blade mounted to the spindle. The two-stage reduction mechanism includes an intermediate shaft positioned between the output shaft of the electric motor and the spindle. The intermediate shaft is positioned forwardly of a reference plane in a cut proceeding direction. The reference plane passes through the output shaft and the spindle.

With this arrangement, in comparison with the arrangement where the intermediate shaft is positioned on or rearwardly of the reference plane, it is possible to easily achieve a balance in weight of the cutting tool because the gravity center of the reduction gear section and eventually the gravity center of the cutting tool can be shifted forwardly.

The tool unit includes a main handle and a front handle. The main handle may be configured to be grasped with one hand of an operator. The front handle may be provided on a front portion of the main handle and may be configured to be grasped with the other hand of the operator. The front handle may be positioned forwardly of the reference plane in the cut proceeding direction. With this arrangement, it is possible to further easily achieve a balance in weight of the cutting tool.

The tool unit may further include a lighting device for illuminating a portion of the cutting blade cutting into the workpiece. The lighting device may be positioned forwardly of the reference plane in the cut proceeding direction. With this arrangement, it is possible to further easily achieve a balance in weight of the cutting tool.

The cutting tool may further include a blow nozzle for blowing air that cools the electric motor, toward an alignment guide mounted to a front portion of the base. The blow nozzle may be positioned forwardly of the reference plane in the cut proceeding direction. With this arrangement, it is possible to further easily achieve a balance in weight of the cutting tool.

The cutting tool may further include a lock lever operable to prevent rotation of the output shaft of the electric motor. The lock lever may have a gravity center that is positioned forwardly of the reference plane in the cut proceeding direction. With this arrangement, it is possible to further easily achieve a balance in weight of the cutting tool.

The tool unit may further include a wrench holder configured to be able to hold a wrench that may be used for mounting the cutting blade to the spindle and for removing the cutting blade from the spindle. The wrench holder may be positioned forwardly of the reference plane in the cut proceeding direction. With this arrangement, it is possible to further easily achieve a balance in weight of the cutting tool.

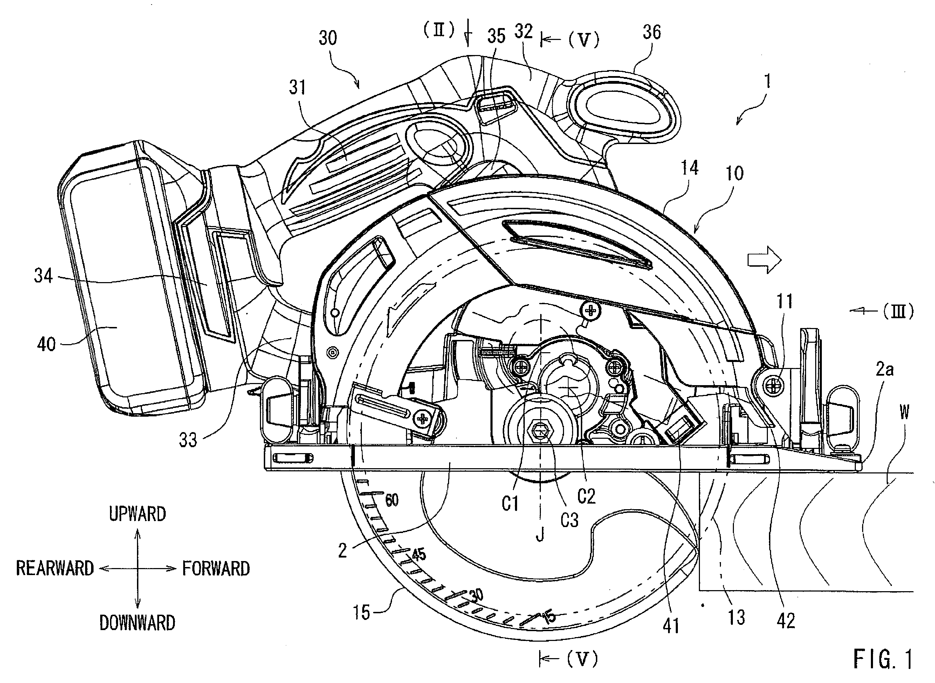

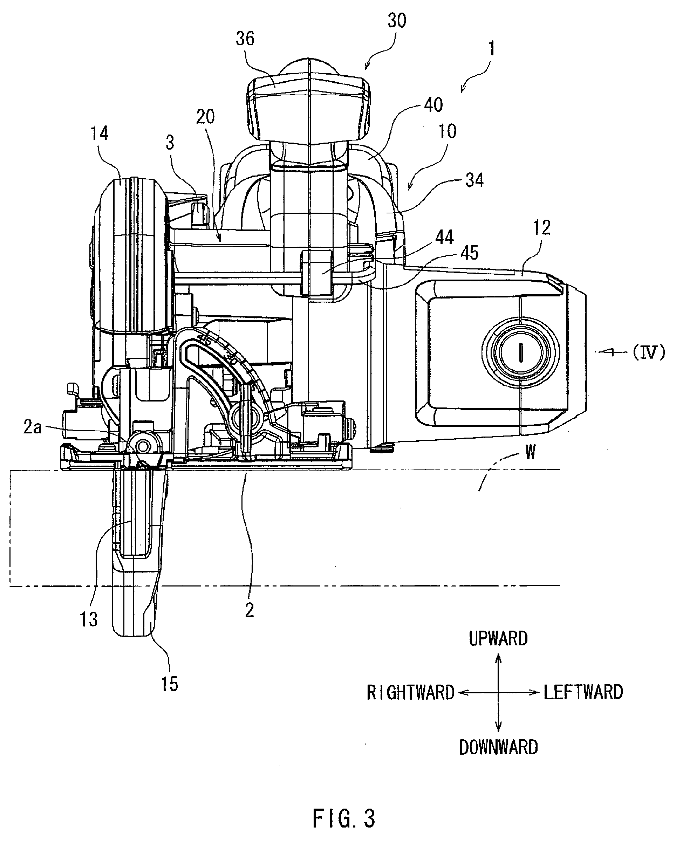

A representative example will now be described with reference to the drawings. Referring to FIG. 1, there is shown a cutting tool 1 configured as a portable circular saw. The cutting tool 1 generally includes a base 2 and a tool unit 10. The base 2 is adapted to be placed on an upper surface of a workpiece W (see FIG 3). The tool unit 10 is supported on the upper surface of the base 2. More specifically, the tool unit 10 is vertically pivotally supported on the upper surface of the base 2 via a pivotal support shaft 11 that is positioned on a front side with respect to a cut proceeding direction indicated by an outline arrow in FIG 1. Here, the term "cut proceeding direction" is used to mean a moving direction of the cutting tool 1 during the cutting operation. During the cutting operation, the operator may be positioned on the rear side (left side as viewed in FIG 1). In the following explanation, the side of the cutting tool 1 in the cut proceeding direction will be referred to as a front side, the side opposite to the front side will be refereed to as a rear side, and the left side and the right side are used to means the left side and the right side as viewed from the side of the operator who is positioned on the rear side. The right side and the left side will be also referred to as a front side and a back side, respectively, of the cutting tool 1.

Referring to FIGS. 1 to 4, the tool unit 10 includes a circular cutting blade 13 that is rotatably driven by an electric motor 12. A substantially upper half of the cutting blade 13 is covered by a blade case 14. The lower half of the cutting blade 13 protrudes downward from the base 2. The downwardly protruding portion of the cutting blade 13 is covered by a movable cover 15 that can be moved to be opened and closed. When the cutting tool 1 is moved with the front end of the movable cover 15 contacting with the workpiece W, the movable cover 15 pivots in a clockwise direction as viewed in FIG 1 so as to be opened for exposing the lower half of the cutting blade 13, so that the workpiece W is cut by the exposed lower half of the cutting blade 13.

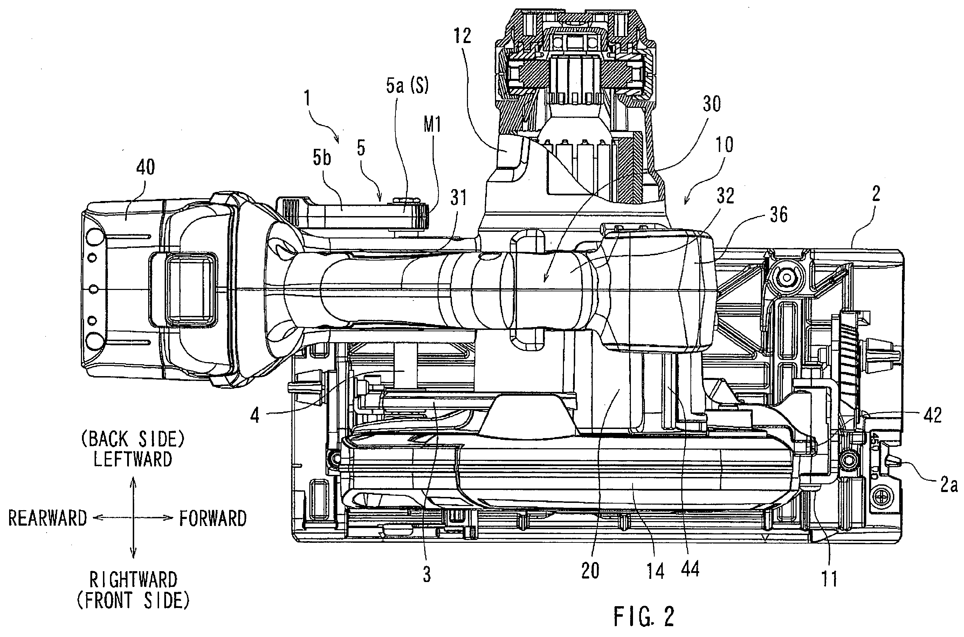

As shown in FIGS. 2 and 3, the electric motor 12 is mounted to the back side of the blade case 14 via a reduction gear section 20. A handle 30 is provided at a position adjacent to a joint portion between the reduction gear section 20 and the electric motor 12. The handle 30 has a configuration corresponding to a part of a loop and extends between the upper surface and the rear surface of the gear section 20. The handle 30 has a first grip portion 31, a second grip portion 32, a joint portion 33 and a battery mount base 34. The first grip portion 31 is positioned on the rear side and is configured to be able to be grasped with one hand of the operator. The second grip portion 32 is positioned on the rear side and is configured to be able to be grasped with the other hand of the operator. The joint portion 33 joins the rear portion of the first grip portion 31 to the rear surface of the reduction gear section 20. The battery mount base 34 is provided between the rear portion of the first grip portion 31 and the rear portion of the joint portion 33. A trigger-type switch lever 35 is mounted to the inner circumferential side of the handle 30. The operator can push the switch lever 35 by his or her fingers, mainly the index finger, of the hand of the operator when the operator grasps the first grip portion 31 with the same hand. A battery pack 40 is mounted to the battery mount base 34 at the rear portion of the handle 30. The battery pack 40 has a plurality of battery cells (not shown) disposed therein and can be repeatedly used as a power source. Therefore, the battery pack 40 can be removed from the battery mount base 34 and can be charged by a charger (not shown) that is a separate device from the cutting tool 1. In this example, the battery pack 40 can be mounted to and removed from the battery mount base 34 by upwardly and downwardly slidably moving the battery pack 40 along the battery mount base 34. The handle 30 will be described more in detail later.

As described previously, the base 2 vertically pivotally supports the front portion of the tool unit 10 via the pivotal support shaft 11. The downwardly protruding distance of the cutting blade 13 from the base 2 can be adjusted by changing the pivoted position of the tool unit 10, so that it is possible to adjust the cutting depth of the cutting blade 13 into the workpiece W.

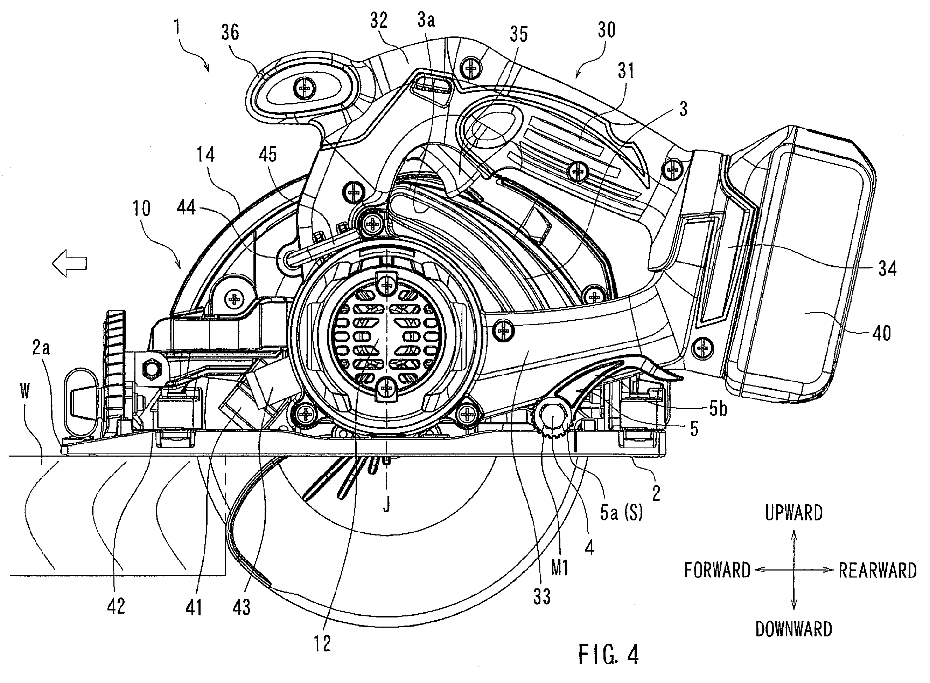

As shown in FIGS. 2 and 4, a guide member 3 called a depth guide is mounted to the rear portion of the upper surface of the base 2. The guide member 3 is positioned between the blade case 14 and the handle 30 as viewed in a plan view of FIG 2 and extends vertically along the back side of the blade case 14. The guide member 3 is curved to have an arc shape about the axis of the pivotal support shaft 11. An arc-shaped elongated guide slot 3a is formed in the guide member 3 and extends substantially throughout the length of the guide member 3. A fixing screw 4 is inserted into the slot 3a and is engaged with and tightened into a corresponding threaded hole formed in the back surface of the blade case 14. As shown in FIGS. 2 and 4, the fixing screw 4 extends leftward (upward as viewed in FIG. 2) from the back surface of the blade case 14 though the slot 3a of the guide member 3. Therefore, the fixing screw 4 has a relatively long length. An operation lever 5 is mounted to the left end of the fixing screw 4. Therefore, when the operator holds the operation lever with his or her fingers and pivots the operation lever 5 in opposite directions, the fixing screw 4 rotates in a tightening direction and a loosening direction. When the fixing screw 4 is loosened by the operation of the operation lever 5, the tool unit 10 is allowed to pivot vertically relative to the base 2. As the tool unit 10 pivots vertically relative to the base 2 in the state where the fixing screw 4 has been loosened, the protruding distance of the cutting blade 13 from the lower surface of the base 2 can be changed to adjust the cutting depth. After the tool unit 10 has been pivoted to provide a desired cutting depth, the operator pivots the operation lever 5 in the tightening direction, so that the vertical pivoted position of the tool unit 10 can be fixed for the desire cutting depth.

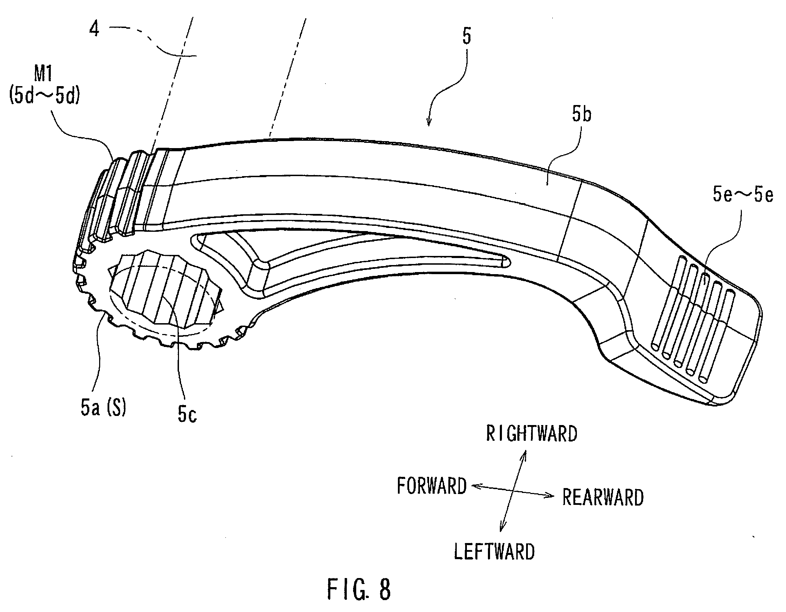

As shown in FIG. 8, the operation lever 5 includes an annular base end portion 5a and a lever portion 5b. The base end portion 5a has a hole 5c for receiving the left end of the fixing screw 4. The lever portion 5b extends substantially radially from the annular base portion 5a. The inner circumferential wall of the hole 5c is formed with saw-teeth like serrations for engaging the left end of the fixing screw 4, so that the operation lever 5 pivots in unison with the fixing screw 4.

A friction portion M1 is formed on the outer circumferential surface of the base end portion 5a for increasing a frictional force applied to fingers of the operator. In this example, the friction portion M1 is formed by a plurality of linear projections 5d each having a trapezoidal cross-sectional configuration and extending in parallel to the axial direction of the base end portion 5a. The linear projections 5d are arranged in the circumferential direction of the base end portion 5a in a manner like vertical stripes. The linear projections 5d may frictionally engage the fingers of the operator for producing a frictional force against the fingers. Therefore, the operator can easily pivot the operation lever 5 by holding the lever portion 5b with his or her fingers or by putting fingers on the outer circumferential surface of the base end portion 5a and applying a rotational force to the base end portion 5a for pivoting the operation lever 5. Hence, the fixing screw 4 can be rotated in either the tightening direction or the loosening direction. In this way, the base end portion 5a serves as a rotational operation member S provided integrally with the operation lever 5. Parallel liner projections 5e are also formed on the distal end of the lever portion 5b for preventing slippage of fingers.

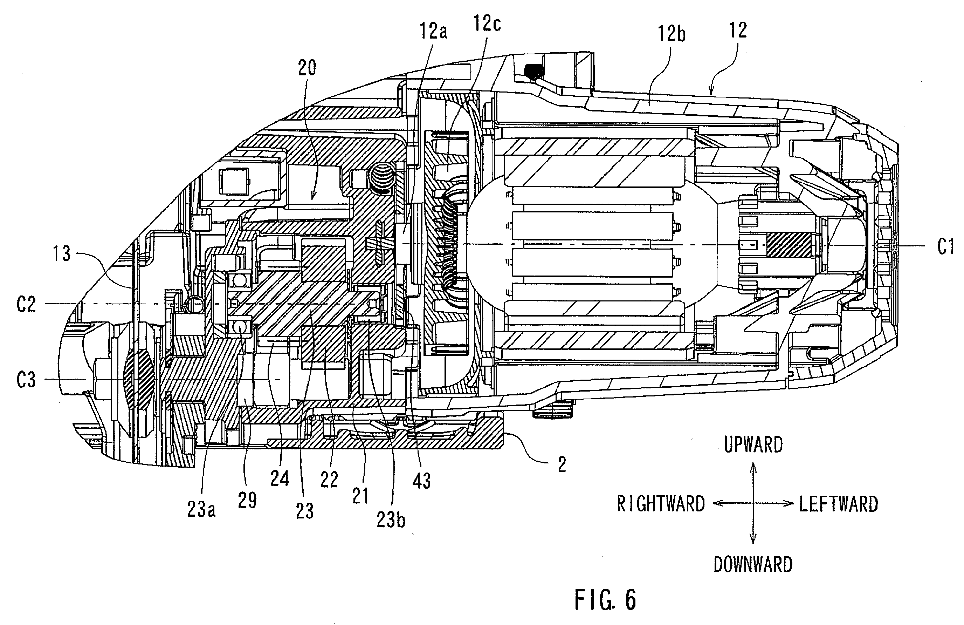

With the friction portion M1 (linear projections 5d) of the rotational operation member S integrated with the operation lever 5, it is possible to improve the operability of the operation lever 5 for adjusting the cutting depth. In FIG. 6, the operation lever 5 positioned at a tightening position is shown by two-dot chain lines, and the operation lever 5 positioned at a loosening position is shown by solid lines. As the operation lever 5 rotates to the tightening position, the fixing screw 4 is tightened to fix the vertical pivoted position of the tool unit 10 (i.e., the cutting depth of the cutting blade 13). On the other hand, as the operation lever 5 rotates to the loosening position, the fixing screw 4 is loosened to allow the vertical pivotal movement of the tool unit 10.

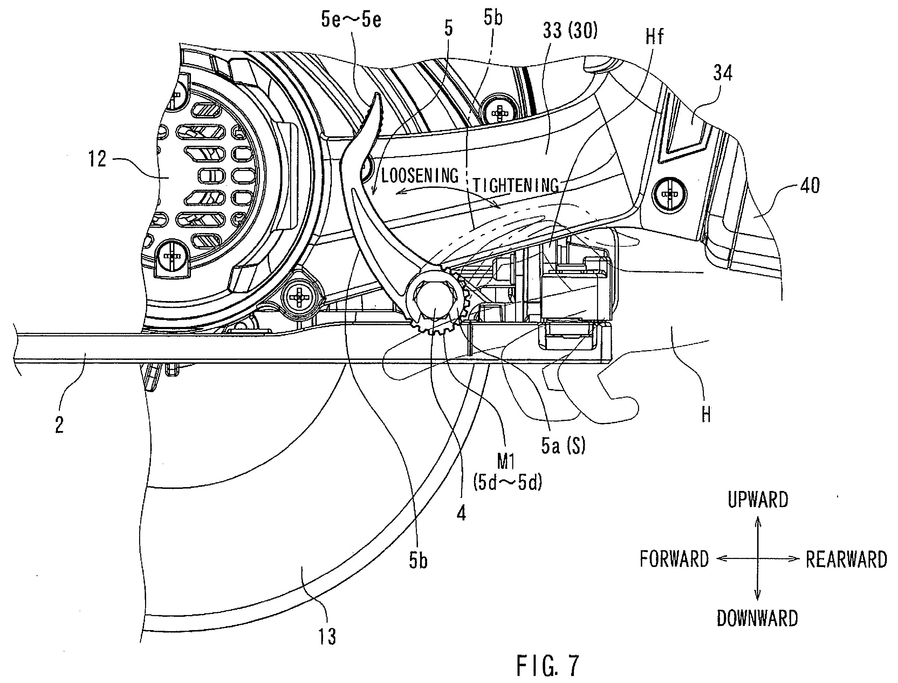

The operator may hold the distal end of the lever portion 5b of the operation lever 5 for pivoting the operation lever 5 from the tightening position indicated by two-dot chain lines to the loosening position indicated by solid lines in FIG 7. When the operation lever 5 is pivoted to reach the loosening position, the vertical position of the tool unit 10 can be changed for adjusting the cutting depth of the cutting blade 13.

For example, the operator may hold the base 2 with his or her one hand H (e.g., the left hand) and may pivot the tool unit 10 vertically by using the other hand. When the cutting depth of the cutting blade 13 has reached a desired depth, the operator may pivot the operation lever 5 to the tightening position indicated by two-dot chain lines in FIG 7, so that the cutting depth can be set to the desired depth. During this operation, the one hand H of the operator may hold the base 2 and the other hand of the operator may hold the tool unit 10 not to pivot in the vertical direction. Therefore, it may be possible that the fingers of the one hand H may not reach the distal end of the operation lever 5. However, in this example, the operator can extend his or her index finger Hf of the left hand H holding the base 2 to the circumferential surface (where the friction portion M1 is provided) of the base end portion 5a, so that the operator can press the index finger Hf against the circumferential surface and move it in the circumferential direction for pivoting the operation lever 5 in the tightening direction. Therefore, it is possible to move the distal end of the lever portion 5b of the operation lever 5 to a position where any of the fingers of the left hand H can reach. Otherwise, it is possible to provisionally fix the vertical position of the tool unit 10.

Thus, the operator can move the friction portion M1 by using his or her fingers for moving the operation lever 5 toward the operator while the base 2 and the tool unit 10 are held in position. Thereafter, the operator can hold the lever portion 5b for pivoting the operation lever 5 to the tightening position in order to firmly tighten the fixing screw 4. Alternatively, after the tool unit 10 has been provisionally fixed in position, the operator's hand that holds the base 2 or the operator's hand that holds the tool unit 10 may be released and may then be used for pivoting the lever portion 5b of the operation lever 5 vertically downward for firmly tightening the fixing screw 4.

In this way, in order to adjust the cutting depth of the cutting blade 13, the operator can certainly and easily pivot the operation lever 5 in the tightening direction while the operator holds the base 2 with one hand H and holds the tool unit 10 with the other hand. Thus, it is possible to reliably fix the cutting depth to a desired depth without causing substantial change after it has been set.

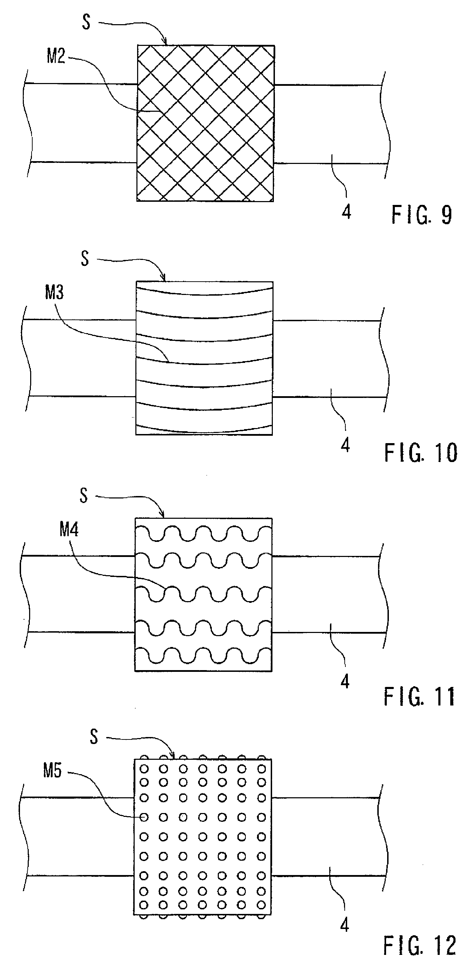

In the above example, the base end portion 5a of the operation lever 5 serves as the rotational operation member S. However, it may be possible to provide a rotational operation member separately from the operation lever 5. For example, such a separate rotational operation member may have a cylindrical tubular configuration and may be mounted to the fixing screw 4 at a position between the blade case 14 and the handle 30 (upper side of the guide member 3 as viewed in FIG 2). In such a case, it may be possible to eliminate the operation lever 5 and to enable the fixing screw 4 to be tightened or loosened only by means of the rotational operation member. FIGS. 9 to 12 show several examples of rotational operation members S that may be provided separately from the operation lever 5.

Further, the rotational operation member having the friction portion M1 on its outer circumferential surface may have a configuration other than a cylindrical tubular configuration. For example, the rotational operation member may have a truncated conical tubular configuration or a tubular configuration having an oblong, triangular, rectangular or polygonal shape in cross section. It may be also possible that the rotational operation member has a spherical shape.

Furthermore, although the friction portion M1 is configured by a plurality of linear projections 5d each having a trapezoidal cross section and arranged in a manner like vertical stripes, the friction portion M1 may be replaced with a friction portion having a different configuration than that of the friction portion M1. For example, a friction portion M2 shown in FIG 9 has a plurality of projections or recesses each having a triangular, V-shaped or semicircular cross section and arranged in a lattice pattern. Each of a friction portion M3 shown in FIG 10 and a friction portion M4 shown in FIG 11 has a plurality of projections and recesses arranged in a pattern of parallel waveforms. A friction portion M5 shown in FIG 12 has a plurality of uniformly arranged small projections. It may be also possible to use a textured pattern or a pattern like a scaly skin for providing a friction portion. Alternatively, a vinyl tape may be wrapped around the fixing screw 4 to form a friction portion. It may be also possible to mold the rotational operation member by using rubber or silicon as the material, so that the rotational operation member itself may serve as a friction portion. In this way, the rotational operation member having a sufficient frictional resistance at least against fingers of the operator may be provided on the fixing screw 4 for enabling the rotational operation of the fixing screw 4 mainly in the tightening direction by using only one finger, so that the adjustment of the cutting depth can be facilitated.

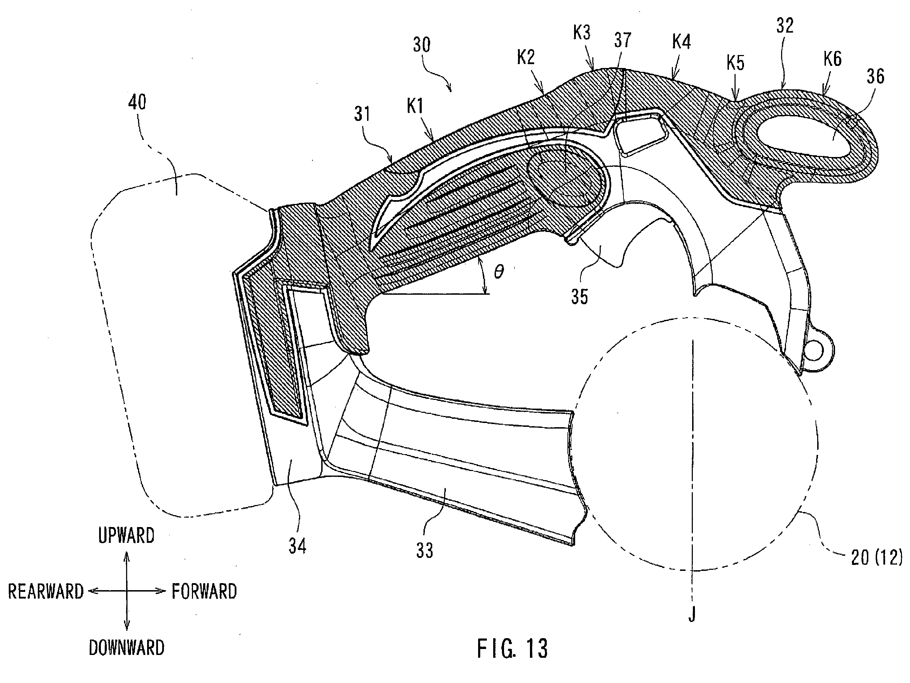

The details of the handle 30 will now be described with reference to FIG 13. The first grip portion 31 and the second grip portion 32 positioned on the rear side and the front side, respectively, are joined to each other in a manner like an angle. In other words, the first grip portion 31 is inclined downward toward the rear side from an apex of the angle, and the second grip portion 32 is inclined downward toward the front side from the apex. The battery mount base 34 is positioned at the rear end of the first grip portion 31. The joint portion 33 is connected to the rear part of the first grip portion 31 via the battery mount base 34. The front part of the joint portion 33 is connected to the rear portion of the reduction gear section 20. The front part of the second grip portion 32 is connected to the front portion of the reduction gear section 20.

Mainly an upper surface of the handle 30 is configured to be uneven. More specifically, and the handle 30 has a first surface portion K1, a second surface portion K2, a third surface portion K3, a fourth surface portion K4, a fifth surface portion K5 and a sixth surface portions K6 that are gently convexed or concaved to substantially conform to the configurations of palms of the hands of the operator who grasps the handle 30. The third surface portion K3 is formed at a joint region between the first grip portion 31 and the second grip portion 32, in particular at a position corresponding to the apex of the angle shape formed by the first grip portion 31 and the second grip portion 32. The third surface portion K3 is upwardly gently curved as viewed from the lateral side (i.e., right or left side). The first grip portion 31 extends from the joint portion so as to be inclined downward in the rearward direction. In this example, a downward inclination angle θ of the first grip portion 31 relative to an upper surface of the base 2 is about 20° when the cutting depth is set to a maximum depth. However, the angle θ may be within a range of between about 20° and 30°, which is larger than an inclination angle normally set for this kind of circular saw. This setting of the angle θ enables the user to effectively apply a pushing force to the first grip portion 31 for moving the cutting tool 1 in the cut proceeding direction with the cutting depth set to a maximum depth that may be most frequently used. Therefore, the operability and the workability of the cutting tool 1 can be further improved.

The first grip portion 31 has the first surface portion K1 and the second surface portion K2. The second surface portion K2 is positioned on the rear side of the third surface portion K3 and is configured as a concave surface that is downwardly gently curved as viewed from the lateral side. The first surface portion K1 is positioned on the rear side of the second surface portion K2 and is configured as a convex surface that is upwardly gently curved as viewed from the lateral side. The second grip portion 32 has the fourth to sixth surface portions K4 to K6. The fourth surface portion K4 is positioned on the front side of the third surface portion K3 and is configured as a convex surface that is upwardly gently curved as viewed from the lateral side. The fifth surface portion K5 is positioned on the front side of the fourth surface portion K4 and is configured as a concave surface that is downwardly gently curved as viewed from the lateral side. The sixth surface portion K6 is positioned on the front side of the fifth surface portion K5 and is configured as a convex surface that is upwardly gently curved as viewed from the lateral side. In this example, the second grip portion 32 includes a front grip portion 36 that extends forwardly from the second grip portion 32. The sixth surface portion K6 is formed on the upper surface of the front grip portion 36, and the fifth surface portion K5 is formed on the upper surface of the base end (rear end) of the front grip portion 36. The first surface portion K1, the second surface portion K2, the third surface portion K3, the fourth surface portion K4, the fifth surface portion k5 and the sixth surface portions K6 are arranged in this order in a direction from the rear side of the handle 30 and extend continuously along a smoothly upwardly and downwardly curved line.

The upper surface of the handle 30 including the first to sixth surface portions K1 to K6 may be covered with an elastomeric layer for preventing slippage of fingers or palms of the operator's hands and for providing a good grip feeling (more specifically, a good fit feeling with palms and fingers). In particular, in this example, the elastomeric layer covers the entire outer surface of the front grip portion 36 except for opposite left and right side surfaces of the front grip portion 36.

The lower surface and the left and right side surfaces of the first grip portion 31 are also covered with the elastomeric layer. In addition, the elastomeric layer extends to also cover substantially the upper half of the battery mount base 34. In this way, the elastomeric layer covers substantially all the regions of the handle 30, to which the hands of the operator may contact when the operator grasps the handle 30 with his one hand or both hands. Therefore, it is possible to reliably prevent slippage of fingers or palms of the operator's hand(s) on the handle 30 and to ensure a good grip feeling of the handle 30. In FIG 13, the regions of the handle 30 covered by the elastomeric layer are hatched.

Further, in this example, a portion of the elastomeric layer covering the upper surface and the left and right side surfaces of the battery mount base 34 and a portion of the elastomeric layer covering the upper surface, the lower surface and the left and right side surfaces of the handle 30 are connected in series with each other at a rear part of the first grip portion 31. Therefore, a process of molding the elastomeric material for covering the handle 30 with the elastomeric layer can be facilitated.

The handle 30 configured as described above can provide a good gripping performance both in the case where the operator grasps the handle 30 with only one hand for moving the cutting tool 1 and in the case where the operator grasps the handle 30 with both hands for moving the cutting tool 1. For example, the operator may hold the handle 30 by grasping the first grip portion 31 with his or her right hand and by grasping the second grip portion 32 with his or her left hand. In such a case, an interdigital area between the thumb and the index finger of the right hand may fit into the second surface portion K2 (concave surface) while the palm of the right hand may be pressed against the first surface portion K1 (convex surface). When the right hand is positioned in this way, the third surface portion K3 (convex surface) is positioned on the front side of the interdigital area. Therefore, in order to move the cutting tool 1 forwardly in the cut proceeding direction, the operator can effectively apply a pushing force to the handle 30 with his or her right hand. Hence, the operability of the cutting tool 1 can be improved.

Further, in this example, the switch lever 35 is disposed at a position diagonally forward in the downward direction of the second surface portion K2 (concave surface). Therefore, the second surface portion K2 is positioned on an operational line, along which the switch lever 35 is moved for operation. In other words, the moving direction of the finger(s) for pushing the switch lever 35 extends across the second surface portion K2. Therefore, when the operator grasps the first grip portion 31 with his or her right hand such that an interdigital area between the thumb and the index finger of the right hand fits into the second surface portion K2 (concave surface), the direction of extending and retracting the index finger of the operator may substantially coincide with the moving direction of the switch lever 35. As a result, in order to engage the index finger with the switch lever 35 for the pushing operation (i.e. the operation for switching on the switch lever 35) and for the releasing or returning operation (i.e., the operation for switching off the switch lever 35), the operator can easily extend and retract the index finger without need of taking a difficult position, such as a position that needs to twist the index finger. Therefore, the stress applied to the index finger may be reduced, and the operability of the switch lever 35 can be improved.

Further, in this example, a pair of finger contact portions 37 (only one finger contact portion 37 is shown in FIG 13) each configured as a substantially elliptical concave portion are formed at positions between the second surface portion K2 and the switch lever 35. Each of the finger contact portions 37 is positioned on the operational line of the switch lever 35. In other words, the moving direction of the finger(s) for pushing the switch lever 35 extends across the finger contact portions 37. In particular, the finger contact portions 37 are formed on the elastomeric layer covering the lower side surface of the first grip portion 31. Therefore, when the operator grasps the switch lever 35, the thumb of the hand of the operator can be engaged with either one of the finger contact portions 37. Hence, potential slippage of the thumb can be prevented. As a result, the gripping performance of the first grip portion 31 and eventually the gripping performance of the handle 30 can be further improved.

Furthermore, as described previously, the fourth surface portion K4 is formed at a position between the third surface portion K3 and the fifth surface portion K5. The distance between the fourth surface portion K4 and the fifth surface portion K5 is shorter than the distance between the third surface portion K3 and the fourth surface portion K4. Therefore, for example, if the operator grasps the front grip portion 36 of the second grip portion 32 with his or her left hand in such a state that a portion of the hand around the base of the thumb fits into the fifth surface portion K5 (concave surface), the operator can easily apply a force to the fourth surface portion K4 for moving the handle 30 in a direction opposite to the cut proceeding direction.

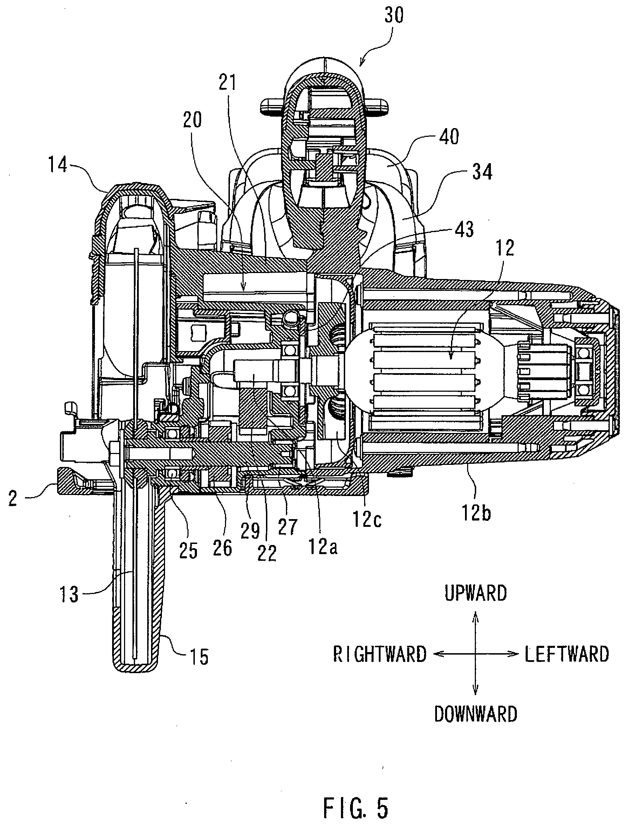

Next, the reduction gear section 20 will now be described. The reduction gear section 20 is configured to reduce the rotational output of the electric motor 12 in two stages before transmission to a spindle 29. Referring to FIGS. 5 and 6, the reduction gear section 20 has a gear case 21 that is formed integrally with the backside surface of the blade case 14. The electric motor 12 has a motor case 12b that is joined to the backside surface of the gear case 21. An output shaft 12a of the electric motor 12 extends into the gear case 21 and has a drive gear that engages an intermediate drive gear 22. The intermediate drive gear 22 is fixedly mounted to an intermediate shaft 23. The intermediate shaft 23 is positioned between the output shaft 12a of the electric motor 12 and the spindle 29 and extends parallel to the output shaft 12a and the spindle 29. Opposite ends of the intermediate shaft 23 are rotatably supported by the gear case 21 via bearings 23a and 23b. In addition to the intermediate drive gear 22 described above, an intermediate driven gear 24 is fixedly mounted to the intermediate shaft 23. The intermediate driven gear 24 engages an output gear 26 that is fixedly mounted to the spindle 29. Therefore, the rotation of the electric motor 12 is reduced through engagement between the drive gear of the output shaft 12a and the intermediate drive gear 22 (first reduction stage) and is further reduced through engagement between the intermediate driven gear 24 and the output gear 26 before transmission to the spindle 29. The spindle 29 is rotatably supported by the gear case 21 via bearings 25 and 27. The front end (left end as viewed in FIG. 5) of the spindle 29 extends into the blade case 14. The circular cutting blade 13 is mounted to the front end of the spindle 29 at a position within the blade case 14.

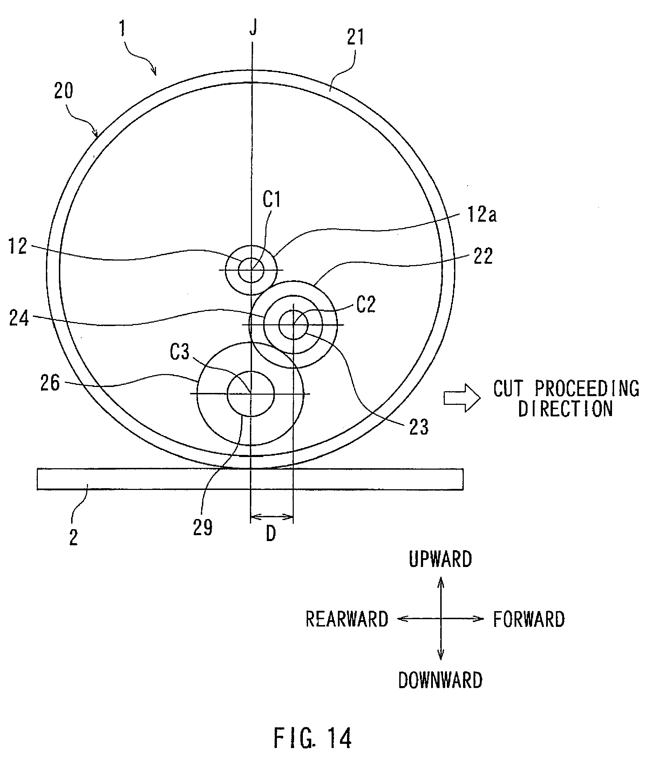

In this example, the output shaft 12a of the electric motor 12, the intermediate shaft 23 and the spindle 29 are not positioned within a same plane. As shown in FIG. 14, an axis C2 of the intermediate shaft 23 is displaced from a reference plane J that passes through an axis C1 of the output shaft 12a and an axis C3 of the spindle 29. More specifically, the axis C2 of the intermediate shaft 23 is displaced forwardly in the cut proceeding direction from the reference plane J by a distance D. In other words, the axis C2 of the intermediate shaft 23 is positioned forwardly of both of the axis C1 and the axis C3. Therefore, the distance between the distance between the axis C1 and the axis C3 is smaller than the sum of the distance between the axis C1 and the axis C2 and the distance between the axis C2 and the axis C3. This arrangement enables to reduce the size in height of the reduction gear section 20 in comparison the arrangement where the output shaft 12a of the electric motor 12, the intermediate shaft 23 and the spindle 29 are positioned within the reference plane J. In addition, because the two-stage speed reduction is achieved by the incorporation of the intermediate shaft 23, it is possible to reduce the diameter of the output gear 26 than in the case of a single-stage speed reduction. Therefore, it is possible to set a large cutting depth by pivoting the tool unit 1 closer to the base 2.

Further, because the intermediate shaft 23, the intermediate drive gear 22 and the intermediate driven gear 24 are positioned forwardly of the reference plane J, the gravity center of the reduction gear section 20 and eventually the gravity center of the cutting tool 1 can be set to be forwardly than in the case where the intermediate shaft 23, the intermediate drive gear 22 and the intermediate driven gear 24 are positioned rearwardly relative to the reference plane J. In particular, in the present case of the invention that the battery pack 40 having a relatively large weight is mounted to the rear portion of the handle 30, a weight balance is achieved by setting the gravity center of the cutting tool 1 forwardly than in the case where no battery pack 40 is provided. Therefore, the operability and the workability is further improved.

Furthermore, in this example, in addition to the intermediate shaft 23 and its associated gears for two-stage speed reduction, the front grip portion 36 described previously, a lighting device 41, a blow nozzle 42, a lock lever 43 for locking the spindle 29 and a wrench holder 44 are also positioned forwardly of the reference plane J for achieving a balance in weight with the battery pack 40. More specifically, as shown in FIG 1, the front grip portion 36 of the second grip portion 32 is positioned forwardly of the reference plane J. The lighting device 41 is mounted to the backside surface of the blade case 14 for illuminating a portion of the cutting blade 13, which cuts into the workpiece W during the cutting operation. Thus, a LED as a light source of the lighting device 41 and a base plate to which the LED is mounted are positioned forwardly of the reference plane J.

The blow nozzle 42 is disposed on the backside of the blade case 14 for blowing a cooling air toward an alignment guide 2a after cooling the electric motor 12. The alignment guide 2a is mounted to the front end of the base 2 for alignment with a line that may be marked on the workpiece to be cut. The blow nozzle 42 is formed with the blade case 14 for discharging the cooling air and is positioned forwardly of the reference plane J. As shown in FIGS. 5 and 6, a fan 12c for producing a flow of the cooling air is mounted to the output shaft 12a of the electric motor 12. As the fan 12c rotates with the output shaft 12a, the external air is introduced into the motor case 12b to cool the electric motor 12. After cooling the electric motor 12, the air is introduced into the blade case 14 and is thereafter discharged from the blow nozzle 42 toward the alignment guide 2a. The air may then be applied to the surface of the alignment guide 2a, so that cut powder and cut chips or the like deposited on the alignment guide 2a can be blown off. Therefore, it is possible ensure the visibility of the alignment guide 2a.

The lock lever 43 is mounted to the front portion of the electric motor 12. When the operator pushes the lock lever 43 into the motor case 12b, the lock lever 43 may engage a part of the output shaft 12a, which part has diametrically opposed parallel flat surfaces, so that the output shaft 12a can be prevented from rotation. Therefore, the spindle 29 can be prevented from rotation, so that to the operation for replacement of the cutting blade 13 with another cutting blade can be facilitated. The lock lever 43 is also positioned forwardly of the reference plane J.

As shown in FIGS. 3 and 4, the wrench holder 44 is formed integrally with the front portion of the electric motor 12. The wrench holder 44 is configured such that a wrench 45, such as a hexagonal wrench, can be inserted into the wrench holder 44 and held by the same. The wrench 45 may be used, for example, for tightening and releasing fixing screws that can fix the cutting blade 13 to the spindle 29 when the cutting blade 13 is necessary to be replaced. Because the wrench 45 can be held at a position of the front portion of the electric motor 12, it is not necessary to look around for a wrench at each time when the replacement work for the cutting blade 13 is performed. Therefore, the replacement work can be quickly started. Further, because the wrench 45 is held at the front portion of the electric motor 12, which is positioned forwardly of the reference plane J, it is possible to take a balance in weight with the battery pack 40.

In this way, with the battery driven cutting tool 1 of this example, in order to take a balance in weight with the battery pack 40 that has a relatively heavy weight, the gravity center of the reduction gear section 20 is set to be positioned forwardly of the reference plane J, and additionally, various components other than the reduction gear section 20 are also positioned forwardly of the reference plane J. The balance in weight of the cutting tool 1 with the battery pack 40 can reduce fatigue of hands of the operator, in particular in the case that the operator supports the cutting tool 1 with his or her hands during the cutting operation. In addition, it is possible to improve the handling property and the operability of the cutting tool 1.

As described above, according to the cutting tool 1 of the above example, the reduction gear section 20 has a two-stage reduction mechanism that includes the intermediate shaft 23 provided between the output shaft 12a of the electric motor 12 and the spindle 29. The intermediate shaft 23 is positioned forwardly of the reference plane J in the cut proceeding direction. The reference plane J passes through the output shaft 12a and the spindle 29. Therefore, the gravity center of the reduction gear section 20 and eventually the gravity center of the cutting tool 1 can be set forwardly than in the case where the intermediate shaft 23 is positioned on or rearwardly of the reference plane J. As a result, it is possible to easily take a weight balance.

In addition, the tool unit 10 of the cutting tool 1 has the handle 30 that includes the first grip portion 31. The first grip portion 31 serves as a main handle adapted to be grasped with one hand of the operator. The front grip portion 36 serving as a front handle to be grasped with the other hand of the operator is provided on the front portion of the first grip portion 31. Because the front grip portion 36 is positioned forwardly of the reference plane J, it is possible to set the gravity center of the cutting tool 1 forwardly than in the case where the front grip portion 36 is positioned on or rearwardly of the reference plane J. Therefore, it is possible to further easily achieve the weight balance.

Furthermore, the cutting tool 1 has the lighting device 41 for illumination around a portion of the cutting blade 13 cutting into the workpiece. Because the lighting device 41 is positioned forwardly of the reference plane J, it is possible to set the gravity center of the cutting tool 1 forwardly than in the case where the lighting device 41 is positioned on or rearwardly of the reference plane J. Therefore, it is possible to further easily achieve the weight balance.

Furthermore, the blow nozzle 42 blowing the cooling air toward the alignment guide 2a provided at the front portion of the base 2 is positioned forwardly of the reference plane J. Therefore, it is possible to set the gravity center of the cutting tool 1 forwardly than in the case where the blow nozzle 42 is positioned on or rearwardly of the reference plane J. Therefore, it is possible to further easily achieve the weight balance.

Furthermore, the cutting tool 1 has the lock lever 43 for preventing rotation of the output shaft 12a of the electric motor 12 for the convenience of the replacement work of the cutting blade 13. The lock lever 42 is also positioned forwardly of the reference plane J. Therefore, it is possible to set the gravity center of the cutting tool 1 forwardly also with this arrangement, so that it is possible to further easily achieve the weight balance.

Furthermore, the tool unit 10 has the wrench holder 44 for holding the wrench 45 that can be used for mounting the cutting blade 13 on the spindle 29 and for removing the cutting blade 13 from the spindle 29. The wrench holder 44 is also positioned forwardly of the reference plane J. Therefore, the wrench holder 44 holding the wrench 45 can contribute to set the gravity center of the cutting tool 1 forwardly also with this arrangement, so that it is possible to further easily achieve the weight balance.

In this way, some of parts and mechanisms including the intermediate shaft 23, the intermediate drive gear 22 and the intermediate driven gear 23 mounted to the intermediate shaft 3, the front grip portion 36, the light source of the lighting device 41, the blow nozzle 42, the lock lever 43, and the wrench holder 44 of the cutting tool 1 are positioned forwardly of the reference plane J. Therefore, it is possible to set the gravity center of the cutting tool 1 forwardly. Therefore, it is possible to improve the handling property and the operability of the battery powered cutting tool 1 by setting the gravity center of the cutting tool 1 at a suitable position (e.g. within the reference plane J) for taking a weight balance with the battery pack 40 that is mounted to the rear portion of the handle 30 and may have a relatively heavy weight.

The above example may be modified in various ways. For example, if the gravity center of the cutting tool 1 can be set to a suitable position by the counterbalance of only the reduction gear section 20, the front grip portion 36, the light source the lighting device 41, the blow nozzle 42, the lock lever 43 and the wrench holder 44 are not necessary to be positioned forwardly of the reference plane J.

In addition, but not according to the present invention, the counterbalance due to positioning of the intermediate shaft 23, etc. forwardly of the reference plane J can be also applied to AC-powered cutting tools having no battery pack.

## Claims

1. A cutting tool (1) comprising
a base (2), and
a tool unit (10) coupled to the base (2) and movable together with the base (2) in a cut proceeding direction for cutting a workpiece (W), wherein
the tool unit (10) includes an electric motor (12) having an output shaft (12a), a reduction gear section (20), and a spindle (29) adapted to have a cutting blade (13) mounted thereto,
the reduction gear section (20) is coupled between the output shaft (12a) and the spindle (29), so that the rotation of the output shaft (12a) is transmitted to the spindle (29) via the reduction gear section (20),
the reduction gear section (20) has an intermediate shaft (23), a first reduction gear mechanism (22) provided between the output shaft (12a) and the intermediate shaft (23), and a second reduction gear mechanism (24, 26) provided between the intermediate shaft (23)'and the spindle (29),
the intermediate shaft (23) is positioned forwardly of the output shaft (12a) and the spindle (29) in the cut proceeding direction at least when the tool unit (10) is positioned for cutting the workpiece (W),
**characterized in that** the cutting tool further comprises a battery pack (40) mounted to one end of a handle (30) in the direction opposite to the cut proceeding direction.

2. The cutting tool (1) as in claim 1, wherein the handle (30) extends from the tool unit (10) in a direction opposite to the cut proceeding direction.

3. The cutting tool (1) as in any one of the preceding claims, wherein
the base (2) is configured to be placed on an upper surface of a workpiece (W),
the tool unit (10) is supported on an upper surface of the base (2), and
the intermediate shaft (23) is positioned forwardly of a reference plane (J) in the cut proceeding direction, the reference plane (J) passing through the output shaft (12a) and the spindle (29).

4. The cutting tool (1) as in claim 3, wherein
the tool unit (10) includes a main handle (31) and a front handle (36),
the main handle (31) is configured to be grasped with one hand of an operator,
the front handle (36) is provided on a front portion of the main handle (31) and is configured to be grasped with the other hand of the operator, and
the front handle (36) is positioned forwardly of the reference plane (J) in the cut proceeding direction.

5. The cutting tool (1) as in claim 3 or 4, further comprising a lighting device (41) for illuminating a portion of the cutting blade (13) cutting into the workpiece (W), wherein the lighting device (41) is positioned forwardly of the reference plane (J) in the cut proceeding direction.

6. The cutting tool (1) as in any one of claims 3 to 5, further comprising a blow nozzle (42) for blowing air that cools the electric motor (12), toward an alignment guide (2a) mounted to a front portion of the base (2), wherein the blow nozzle (42) is positioned forwardly of the reference plane (J) in the cut proceeding direction.

7. The cutting tool (1) as in any one of claims 3 to 6, further comprising a lock lever (43) operable to prevent rotation of the output shaft (12a) of the electric motor (12), wherein the lock lever (43) has a gravity center that is positioned forwardly of the reference plane (J) in the cut proceeding direction.

8. The cutting tool (1) as in any one of claims 3 to 7, wherein the tool unit (10) further includes a wrench holder (44) configured to be able to hold a wrench (45) that is used for mounting the cutting blade (13) to the spindle (29) and for removing the cutting blade (13) from the spindle (29), and the wrench holder (44) is positioned forwardly of the reference plane (J) in the cut proceeding direction.

9. The cutting tool (1) as in any one of the preceding claims, wherein a distance between the output shaft (12a) and the spindle (29) is smaller than the sum of a distance between the output shaft (12a) and the intermediate shaft (23) and a distance between the intermediate shaft (23) and the spindle (29).

10. The cutting tool (1) as in any one of the preceding claims, wherein the output shaft (12a), the intermediate shaft (23) and the spindle (29) extend parallel to each other.

11. The cutting tool (1) as in any one of the preceding claims, wherein the tool unit (10) is vertically pivotally coupled to the base (2).

## Patentansprüche

1. Schneidewerkzeug (1), mit
einer Basis (2), und
einer Werkzeugeinheit (10), die an die Basis (2) gekoppelt ist und zusammen mit der Basis (2) in einer Schneidefortschrittsrichtung zum Schneiden eines Werkstücks (W) bewegbar ist, bei dem
die Schneideeinheit (10) einen elektrischen Motor (12), der eine Ausgabewelle (12a) aufweist, einen Untersetzungsgetriebeabschnitt (20) und eine Spindel (29) enthält, die dazu angepasst ist, ein Schneideblatt (13) daran montiert aufzuweisen,
der Untersetzungsgetriebeabschnitt (20) zwischen der Ausgabewelle (12a) und der Spindel (29) gekoppelt ist, so dass die Drehung der Ausgabewelle (12a) an die Spindel (29) über den Untersetzungsgetriebeabschnitt (20) übertragen wird,
der Untersetzungsgetriebeabschnitt (20) eine Zwischenwelle (23), einen ersten Untersetzungsgetriebemechanismus (22), der zwischen der Ausgabewelle (12a) und der Zwischenwelle (23) vorgesehen ist, und einen zweiten Untersetzungsgetriebemechanismus (24, 26) aufweist, der zwischen der Zwischenwelle (23) und der Spindel (29) vorgesehen ist,
die Zwischenwelle (23) vor der Ausgabewelle (12a) und der Spindel (29) in der Schneidefortschrittsrichtung, zumindest wenn die Werkzeugeinheit (10) zum Schneiden des Werkstücks (W) positioniert ist, positioniert ist,
**dadurch gekennzeichnet, dass** das Schneidewerkzeug weiter ein Batteriepack (40) aufweist, das an ein Ende eines Handgriffs (30) in der zu der Schneidefortschrittsrichtung entgegengesetzten Richtung montiert ist.

2. Schneidewerkzeug (1) nach Anspruch 1, bei dem sich der Handgriff (30) von der Werkzeugeinheit (10) in einer zu der Schneidefortschrittsrichtung entgegengesetzten Richtung erstreckt.

3. Schneidewerkzeug (1) nach einem der vorhergehenden Ansprüche, bei dem
die Basis (2) dazu konfiguriert ist, dass sie auf eine obere Oberfläche eines Werkstücks (W) aufgesetzt wird,
die Werkzeugeinheit (10) an einer oberen Oberfläche der Basis (2) gelagert ist, und
die Zwischenwelle (23) vor einer Referenzebene (J) in der Schneidefortschrittsrichtung positioniert ist, wobei die Referenzebene (J) durch die Ausgabewelle (12a) und die Spindel (29) passiert.

4. Schneidewerkzeug (1) nach Anspruch 3, bei dem
die Werkzeugeinheit (10) einen Haupthandgriff (31) und einen vorderen Handgriff (36) enthält,
der Haupthandgriff (31) dazu konfiguriert wird, dass er durch eine Hand eines Benutzers gegriffen wird,
der vordere Handgriff (36) an einer vorderen Position des Haupthandgriffs (31) vorgesehen ist und dazu konfiguriert ist, dass er durch die andere Hand des Benutzers gegriffen wird, und
der vordere Handgriff (36) vor der Referenzebene (J) in der Schneidefortschrittsrichtung positioniert ist.

5. Schneidewerkzeug (1) nach Anspruch 3 oder 4, das weiter eine Beleuchtungsvorrichtung (41) zum Beleuchten eines Teils des Schneideblatts (13), das in das Werkstück (W) schneidet, aufweist, bei dem die Beleuchtungsvorrichtung (41) vor der Referenzebene (J) in der Schneidefortschrittsrichtung positioniert ist.

6. Schneidewerkzeug (1) nach einem der Ansprüche 3 bis 5, das weiter eine Blasdüse (42) zum Blasen von Luft, die den elektrischen Motor (12) kühlt, in Richtung einer Ausrichtführung (2a), die an einem vorderen Teil der Basis (2) montiert ist, bei dem die Blasdüse (42) vor der Referenzebene (J) in der Schneidefortschrittsrichtung positioniert ist.

7. Schneidewerkzeug (1) nach einem der Ansprüche 3 bis 6, das weiter einen Verriegelungshebel (43) aufweist, der zum Verhindern einer Drehung der Ausgabewelle (12a) des elektrischen Motors (12) betätigbar ist, bei dem der Verriegelungshebel (43) einen Schwerpunkt aufweist, der vor der Referenzebene (J) in der Schneidefortschrittsrichtung positioniert ist.

8. Schneidewerkzeug (1) nach einem der Ansprüche 3 bis 7, bei dem die Werkzeugeinheit (10) weiter einen Schraubschlüsselhalter (44) enthält, der dazu konfiguriert ist, dass er einen Schraubschlüssel (45) halten kann, der zum Montieren des Schneideblattes (13) an die Spindel (29) und zum Entfernen des Schneideblatts (13) von der Spindel (29) verwendet wird, und der Schraubschlüsselhalter (44) vor der Referenzebene (J) in der Schneidefortschrittsrichtung positioniert ist.

9. Schneidewerkzeug (1) nach einem der vorhergehenden Ansprüche, bei dem ein Abstand zwischen der Ausgabewelle (12a) und der Spindel (29) kleiner als die Summe eines Abstands zwischen der Ausgabewelle (12a) und der Zwischenwelle (23) und eines Abstands zwischen der Zwischenwelle (23) und der Spindel (29) ist.

10. Schneidewerkzeug (1) nach einem der vorhergehenden Ansprüche, bei dem sich die Ausgabewelle (12a), die Zwischenwelle (23) und die Spindel (29) parallel zueinander erstrecken.

11. Schneidewerkzeug (1) nach einem der vorhergehenden Ansprüche, bei dem die Schneideeinheit (10) vertikal schwenkbar an die Basis (2) gekoppelt ist.

## Revendications

1. Outil de coupe (1) comprenant
une base (2) et
une unité d'outil (10) couplée à la base (2) et mobile conjointement avec la base (2) dans une direction d'avance de coupe pour couper une pièce de travail (W), dans lequel
l'unité d'outil (10) inclut un moteur électrique (12) présentant un arbre de sortie (12a), une section d'engrenage de réduction (20), et une broche (29) adaptée pour avoir une lame de coupe (13) montée dessus,
la section d'engrenage de réduction (20) est couplée entre l'arbre de sortie (12a) et la broche (29) de sorte que la rotation de l'arbre de sortie (12a) soit transmise à la broche (29) via la section d'engrenage de réduction (20),
la section d'engrenage de réduction (20) a un arbre intermédiaire (23), un premier mécanisme d'engrenage de réduction (22) prévu entre l'arbre de sortie (12a) et l'arbre intermédiaire (23), et un second mécanisme d'engrenage de réduction (24, 26) prévu entre l'arbre intermédiaire (23) et la broche (29),
l'arbre intermédiaire (23) est positionné à l'avant de l'arbre de sortie (12a) et la broche (29) dans la direction d'avance de coupe au moins lorsque l'unité d'outil (10) est positionnée pour couper la pièce de travail (W),
**caractérisé en ce que** l'outil de coupe comprend en outre un bloc de batterie (40) monté sur une extrémité d'un manche (30) dans la direction en regard de la direction d'avance de coupe.

2. Outil de coupe (1) selon la revendication 1, dans lequel le manche (30) s'étend de l'unité d'outil (10) dans une direction en regard de la direction d'avance de coupe.

3. Outil de coupe (1) selon l'une quelconque des revendications précédentes, dans lequel
la base (2) est configurée pour être placée sur une surface supérieure d'une pièce de travail (W),
l'unité d'outil (10) est supportée sur une surface supérieure de la base (2) et
l'arbre intermédiaire (23) est positionné à l'avant d'un plan de référence (J) dans la direction d'avance de coupe, le plan de référence (J) passant par l'arbre de sortie (12a) et la broche (29).

4. Outil de coupe (1) selon la revendication 3, dans lequel l'unité d'outil (10) inclut un manche principal (31) et un manche avant (36),
le manche principal (31) est configuré pour être saisi avec une main d'un opérateur,
le manche avant (36) est prévu sur une partie avant du manche principal (31) et est configuré pour être saisi avec l'autre main de l'opérateur et
le manche avant (36) est positionné à l'avant du plan de référence (J) dans la direction d'avance de coupe.

5. Outil de coupe (1) selon la revendication 3 ou 4, comprenant en outre un dispositif d'éclairage (41) pour l'illumination d'une partie de la lame de coupe (13) coupant dans la pièce de travail (W), dans lequel le dispositif d'éclairage (41) est positionné à l'avant du plan de référence (J) dans la direction d'avance de coupe.

6. Outil de coupe (1) selon l'une quelconque des revendications 3 à 5, comprenant en outre une buse soufflante (42) pour souffler de l'air qui refroidit le moteur électrique (12) vers un guidage d'alignement (2a) monté sur une partie avant de la base (2) dans lequel la buse soufflante (42) est positionnée à l'avant du plan de référence (J) dans la direction d'avance de coupe.

7. Outil de coupe (1) selon l'une quelconque des revendications 3 à 6, comprenant en outre un levier de verrouillage (43) servant à empêcher la rotation de l'arbre de sortie (12a) du moteur électrique (12), dans lequel le levier de verrouillage (43) a un centre de gravité qui est positionné à l'avant du plan de référence (J) dans la direction d'avance de coupe.

8. Outil de coupe (1) selon l'une quelconque des revendications 3 à 7, dans lequel l'unité d'outil (10) inclut en outre un support de clé (44) configuré pour être capable de maintenir une clé (45) qui est utilisé pour le montage de la lame de coupe (13) sur la broche (29) et pour le retrait de la lame de coupe (13) de la broche (29), et le support de clé (44) est positionné à l'avant du plan de référence (J) dans la direction d'avance de coupe.

9. Outil de coupe (1) selon l'une quelconque des revendications précédentes, dans lequel une distance entre l'arbre de sortie (12a) et la broche (29) est inférieure à la somme d'une distance entre l'arbre de sortie (12a) et l'arbre intermédiaire (23) et d'une distance entre l'arbre intermédiaire (23) et la broche (29).

10. Outil de coupe (1) selon l'une quelconque des revendications précédentes, dans lequel l'arbre de sortie (12a), l'arbre intermédiaire (23) et la broche (29) s'étendent parallèlement les uns aux autres.

11. Outil de coupe (1) selon l'une quelconque des revendications précédentes, dans lequel l'unité d'outil (10) est couplée de manière à pivoter verticalement à la base (2).
